# EUROPEAN PATENT SPECIFICATION

(11) **EP 2 011 571 B1**
(45) Date of publication and mention of the grant of the patent: **26.01.2011**
(21) Application number: 07018457.7
(22) Date of filing: 20.09.2007
(51) Int. Cl.: B01J 31/12, B01J 27/135, C07F 7/10

(54) **The process for producing isocyanato-alkyl silane**
Herstellungsverfahren für Isocyanat-Alkyl-Silan
Processus de production de silane isocyanoto-alkyl

(30) Priority: 01.06.2007 CN 200710041600
(43) Date of publication of application: 07.01.2009
(73) Proprietor: Zhangjiagang Huasheng Chemicals Co., Ltd., Jingang Town, Zhangjiagang City, Jiangsu 215631 (CN)
(72) Inventor: Zhang, Xianlin, Zhangjiagang City Jiangsu 215631 (CN); Yang, Zhiyong, Zhangjiagang City Jiangsu 215631 (CN); Liu, Dong, Zhangjiagang City Jiangsu 215631 (CN)
(74) Representative: LOUIS, PÖHLAU, LOHRENTZ

(56) References cited:
- WO-A-2005/056564
- WO-A-2008/068175
- US-A- 5 886 205
- GUAN SHIYOU ET AL: "Oxidative ethoxycarbonylation of aniline to ethyl phenylcarbamate catalyzed by silica- supported poly-.gamma.-aminopropyl siloxane metal complexes" 1 January 1993 (1993-01-01), CHINESE JOURNAL OF POLYMER SCIENCE,, PAGE(S) 97 - 102 , XP009102837 ISSN: 0256-7679 * page 98, paragraph 3; table 1 *
- DATABASE CA [Online] CHEMICAL ABSTRACTS SERVICE, COLUMBUS, OHIO, US; KURZINA, I. A. ET AL: "Natural gas catalytic oxidation" XP002500602 retrieved from STN Database accession no. 2005:1039562 & IZVESTIYA VYSSHIKH UCHEBNYKH ZAVEDENII, KHIMIYA I KHIMICHESKAYA TEKHNOLOGIYA , 48(4), 38-40 CODEN: IVUKAR; ISSN: 0579-2991, 2005,

## Description

### FIELD OF THE INVENTION

The invention relates to a synthesis method of isocyanato-alkyl silane and a purification method of silicon-based alkyl carbamate.

### BACKGROUND OF THE INVENTION

It is well known for producing isocyanate from corresponding organic carbamate by thermal pyrolysis.

Moreover, it is also very common to produce isocyanato-alkyl silane from corresponding silicon-based alkyl carbamate by pyrolysis. For instance, the silicon-based alkyl carbamate is heated under a certain temperature to pyrolyze, then distilled under reduced pressure to obtain the isocyanato-alkyl silane.

However, there are defects in the above pyrolysis method as follows. Firstly, the above-said heating temperature is limited to some extent, specifically, too low temperature would influence the reaction yield, while too high temperature would result in byproducts. For example, silicon-based cyanurate is concomitantly produced from bulk polymerization of the silicon-based alkyl carbamate, isocyanato-containing polysiloxane is concomitantly produced from polymerization of the isocyanato-alkyl silane, and so on. The increase of these byproducts directly affects yield of the pyrolysis, at the same time, raises the cost of environment protection for treating these byproducts. Typically, siloxy-based organic carbamate is likely to take place bulk polymerization under a temperature above 200°C, to form isocyanato-containing polysiloxane, thus affecting the yield seriously. However, a temperature below 200°C leads to inadequate pyrolysis, typically in an extent of 10 to 30%.

It is urgent to find a synthesis method of isocyanato-alkyl silane from silicon-based alkyl carbamate, which increases the degree of dealcoholization of the silicon-based alkyl carbamate and affords a high selectivity for the isocyanato-alkyl silane product.

Furthermore, in researches on synthesis of the silicon-based alkyl carbamate, it has been reported that, amino alkyl silane and dialkyl carbonate or cyclic carbonate are reacted, in the presence of alkoxy sodium alcoholate catalyst, to form the silicon-based alkyl carbamate product. However, as to purification method of the resultant product, which is less frequently reported in literatures, the method mainly used is direct rectification under vacuum. Whereas all the direct rectification methods have their defects, for example, the product has comparatively high reactivity, tending to carry out bulk polymerization to correspondingly affect the yield seriously, and furthermore, impurities in the product have similar boiling points, thus bring difficulties during research and manufacture, when the silicon-based alkyl carbamate is needed to be separated.

Thus, also there is need for a purification method for silicon-based alkyl carbamate in the field.

To sum up, there are in lack of a preferable synthesis method of isocyanato-alkyl silane from silicon-based alkyl carbamate, and a purification method of silicon-based alkyl carbamate in this field. Therefore, there are needs for developing such a synthesis method that can increase the degree of dealcoholization of the starting material, i.e. silicon-based alkyl carbamate, and can afford a high selectivity for the isocyanato-alkyl silane product. There are also needs for developing a purification method of silicon-based alkyl carbamate.

US 5,886,205 and WO 2005/056564 disclose the preparation of isocyanato- organosilanes oramsilanys using metal catalysts.

### SUMMARY OF THE INVENTION

There is an object of the invention to obtain a synthesis method that increases the degree of dealcoholization of the starting material, silicon-based alkyl carbamate, and affords a high selectivity for the isocyanato-alkyl silane product.

There is another object of the invention to obtain a purification method of silicon-based alkyl carbamate with high yield, high selectivity and easiness for large-scale production.

Another object of the invention is to obtain transition metal complexes catalyst, which is suitable for catalyzing pyrolysis of silicon-based alkyl carbamate effectively and selectively.

Another object of the invention is to obtain a synthesis method of the above-mentioned transition metal complexes.

Another object of the invention is to obtain use of the above-mentioned transition metal complexes.

In one aspect of the invention, there is provided a synthesis method for producing an isocyanato-alkyl silane, comprising the steps of:
(a) providing a silicon-based alkyl carbamate;
(b) pyrolyzing said silicon-based alkyl carbamate of the step (a) in the presence of transition metal complexes, to obtain said isocyanato-alkyl silane,
   wherein said transition metal complexes comprise the following components:
   an inorganic silica aluminum source component;
   an active component, of 10 to 50mol%, preferably 30 to 50%, of the mole quantity of said inorganic silica aluminum source component;
   grafting component of amino poly-dimethylsiloxane, of 1 to 30mol%, preferably 5 to 10%, of the mole quantity of said inorganic silica aluminum source component,
   wherein
   said active component has a precursor of Sn (II) source;
   said grafting component of amino poly-dimethylsiloxane, which is grafted to a skeleton formed from said inorganic silica aluminum source, has the following structure of formula (IV):

      NH(R)YSi-O-[(CH₃)₂SiO]ₚ-SiY₁NH-R (IV)

      wherein, Y, Y₁ is identical or different C₁∼C₃ alkyl group;
      R, R' is hydrogen, identical or different C₁∼C₃ alkyl group respectively; and p is an integer of 10 to 1000, preferably 50 to 200.

In one embodiment of the invention, said silica aluminum source forms a skeleton of [Na/Al/Si/O] crystal cells, preferably, the mole ratio of Na, Al, Si, O is 1:(1∼2):(1∼3):(1∼6).

Preferably, said active component is loaded on said skeleton of [Na/Al/Si/O] crystal cells, more preferably, said active component is embedded to said skeleton of [Na/Al/Si/O] crystal cells, most preferably, said active component has 10 to 50 volume %, preferably 30 to 50 volume %, of its microscopic particles embedded to said crystal cells.

Preferably, said active component can be loaded by a method comprising the following steps of: molding and drying a mixture of said inorganic silica aluminum source and the corresponding active component, to obtain said skeleton of [Na/Al/Si/O] crystal cells loaded with said active component.

In one embodiment of the invention, said silicon-based alkyl carbamate is a compound of the following formula (I): 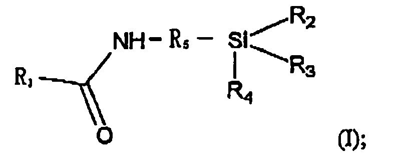 wherein,
R₁ is a saturated C₁∼C₆ alkoxy group;
R₂ is a saturated C₁∼C₆ alkyl group or a saturated C₁∼C₆ alkoxy group;
R₃ is a saturated C₁∼C₆ alkyl group or a saturated C₁∼C₆ alkoxy group;
R₄ is a saturated C₁∼C₆ alkyl group or a saturated C₁∼C₆ alkoxy group;
R₅ is a substituted or unsubstituted carbon chain, preferably, said R₅ is a substituted or unsubstituted -(CH₂)ₙ-, wherein, n is a positive integer of 1 to 6.

In another embodiment of the invention, said isocyanato-alkyl silane is a compound of the following formula (II): 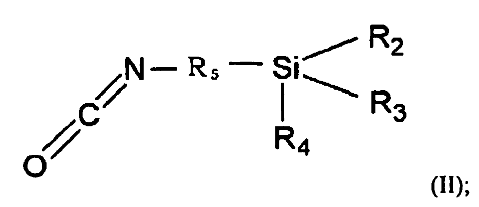
R₂ is a saturated C₁~C₆alkyl group or a saturated C₁~C₆alkoxy group;
R₃ is a saturated C₁~C₆alkyl group or a saturated C₁~C₆ alkoxy group;
R₄ is a saturated C₁~C₆alkyl group or a saturated C₁~C₆alkoxy group;
R₅ is a substituted or unsubstituted carbon chain, preferably, said R₅ is a substituted or unsubstituted -(CH₂)ₙ-, wherein n is a positive integer of 1 to 6.

In one embodiment of the invention, said step (b) is carried out under a pyrolysis temperature ranging from 200 to 350 °C.

In one embodiment of the invention, said step (b) is carried out in the presence of said transition metal complexes in an amount of 0.1~10% of the total weight of said silicon-based alkyl carbamate.

In one embodiment of the invention, said step (b) is carried out for a reaction duration ranging from 0.1 hours to 100 hours.

In one embodiment of the invention, said step (b) is carried out under a reaction pressure ranging from 0.1 kPa to 500 kPa.

In one embodiment of the invention, said step (b) is carried out in the presence of solvent, wherein, said solvent is alkyl carbonate, preferably, said alkyl carbonate is selected from the group consisting of: dimethyl carbonate, diethyl carbonate, dipropyl carbonate, methyl ethyl carbonate, methyl propyl carbonate, ethyl propyl carbonate and combination thereof.

In one embodiment of the invention, said method further comprises an additional step(c):
carrying out dealcoholization reaction under reduced pressure from said isocyanato-alkyl silane obtained by step (b), to obtain purified isocyanato-alkyl silane.

Preferably, the dealcoholization under reduced pressure in said step (c) is carried out under a temperature ranging from 200 to 350 °C.

Preferably, the dealcoholization under reduced pressure in said step (c) is carried out under a vacuum degree ranging from 0.1∼500kPa.

Preferably, said step (c) can be carried out at any time during the beginning to the end of said step (b).

Preferably, the dealcoholization under reduced pressure in said step (c) is carried out by rectification under reduced pressure, wherein the fraction is collected under 100-130 °C/(2∼5) kPa.

The silicon-base alkyl carbamate can be purifited by a porification method, which comprises the steps of:
(I) pyrolyzing said silicon-based alkyl carbamate in the presence of transition metal complexes, to obtain isocyanato-alkyl silane;
(II) carrying out dealcoholization reaction from said isocyanato-alkyl silane of step (I) under reduced pressure, to obtain purified isocyanato-alkyl silane;
(III) forming purified silicon-based alkyl carbamate from said purified isocyanato-alkyl silane of step (II).

In still another aspect of the invention, there is provided a transition metal complexes catalyst suitable for catalyzing pyrolysis of silicon-based alkyl carbamate, which comprises of:
an inorganic silica aluminum source component,
an active component, of 10 to 50mol%, preferably 30 to 50%, of the mole quantity of said inorganic silica aluminum source component;
a grafting component of amino poly-dimethylsiloxane, of I to 30mol%, preferably 5 to 10%, of the mole quantity of said inorganic silica aluminum source component;
wherein,
said active component has a precursor of Sn (II) source;
said grafting component of amino poly-dimethylsiloxane, which is grafted to a skeleton formed from said inorganic silica aluminum source, has the following structure of formula (IV):

   NH(R)YSi-O-[(CH₃)₂SiO]ₚ-SiY₁NH-R' (IV)

   wherein, Y, Y₁ is identical or different C₁∼C₃ alkyl group;
   R, R' is hydrogen, identical or different C₁∼C₃ alkyl group respectively; and p is an integer of 10 to 1000, preferably 50 to 200.

In another aspect of the invention, there is provided a synthesis method for transition metal complexes, comprising the steps of:
(A) providing a skeleton formed by an inorganic silica aluminum component, wherein said skeleton is loaded with an active component that is 10 to 50%, preferably 30 to 50 %, of the mole quantity of said inorganic silica aluminum component, wherein said active component has a precursor of Sn (II) source;
(B) grafting a starting material of grafting component of amino poly-dimethylsiloxane in an amount of 1 to 30%, preferably 5 to 10 %, of the mole quantity of said inorganic silica aluminum component to said skeleton of step (A), to obtain the transition metal complexes of claim 8;
wherein, said starting material has the following structure of formula (IV):

NH(R)YSi-O-[(CH₃)₂SiO]ₚ-SiY₁NH-R' (IV)

Wherein, Y, Y₁ is identical or different C₁~C₃ alkyl group;
R, R' is hydrogen, identical or different C₁~C₃ alkyl group respectively; and p is an integer of 10 to 1000, preferably 50 to 200.

In another aspect of the invention, there is provided use of the present transition metal complexes in catalyzing organic carbamate functional group, to obtain corresponding isocyanate functional group.

### DETAILED DESCRIPTION OF THE INVENTION

After extensive and thorough studies, the present inventors have developed a synthesis method of isocyanato-alkyl silane by improving the synthesis process. Said method has a simple process route, utilizes cheap and available starting materials, and is friendly to the environment. Furthermore, the inventors have surprisingly found out that when a transition metal complex is used as a catalyst for dealcoholization reaction, the degree of dealcoholization of the starting material, silicon-based alkyl carbamate, can be increased, even to more than 95%, the selectivity of isocyanato-alkyl silane can be improved to more than 98%, and also the product purity can be enhanced to more than 99%. Moreover, in a preferred embodiment of the invention, suitable reaction conditions that coordinates to the catalyst can be adopted to effectively control the content of the byproduct silicon-based cyanurate to less than 1%, which is formed during rectification by ternary bulk polymerization due to high activity of isocyanato groups in the isocyanato-alkyl silane. Thus, the invention is accomplished on the above researches.

The primary principles of the present invention are shown as follows:
Put silicon-based alkyl carbamate into a reaction vessel, then add the catalyst under stirring, to carry out chemical reaction under a certain temperature and negative pressure; then rectify the reaction solution obtained to collect desirable fraction such as under 100- 130 °C/(2~5) kPa.

In a preferred embodiment, the method suitable for the invention comprises the following main steps:
providing a reaction mixture containing silicon-based alkyl carbamate as starting material;
employing a transition metal complex as catalyst;
carrying out dealcoholization under suitable temperature;
rectifying and dealcoholizing to obtain isocyanato-alkyl silane.

As used herein, unless indicated otherwise, the term "comprise(s) " in the invention means that various components may be applied to mixture or composition of the invention together. Thus, the term "substantially consist of "and " consist of " are included in the term "comprise(s) ".

As used herein, unless indicated otherwise, the term "alkyl" in the invention means straight or branched alkane group with 1 to 20 carbon atom(s). Specially, "alkyl" of the invention is saturated alkyl group, absence of one or more carbon-carbon double bond or carbon-carbon triple bond. Preferably, "alkyl" of the invention is alkane group with 1 to 10 carbon atom(s), more preferably, 1 to 6 carbon(s), for example, the "alkyl" include but not limited to methyl, ethyl, n-propyl, isopropyl, n-butyl, isobutyl, tert-butyl.

As used herein, unless indicated otherwise, the term "alkoxy" of the invention means "alkyl-O".

Wherein, "alkyl" or "alkoxy" of the invention can either be unsubstituted or substituted with one or more substituents. For example, they can be substituted by groups containing 0 to 6 heterogen atoms such as halogen, oxygen, sulfur, nitrogen. For example, said substituent is selected from the group consisting of amino, alkyl amino, dialkyl amino, aryl amino, diaryl amino, hydroxy, halogen, mercapto, alkyl mercapto, aryl mercapto, alkyl sulfonyl, aryl sulfonyl, amido, amino formyl, guanyl, guanidino, urea, cyano, nitro, acyl, acyloxy, carboxy, ester and combination thereof.

As used herein, unless indicated otherwise, the term "aryl" of the invention means single-ring aromatic compound of C6, double-ring aromatic compound of C10, triple-ring aromatic compound of C14, which can be optionally substituted with 1 to 4 substituents. Such as, the term "aryl" include but not limited to phenyl, naphthyl, anthryl.

As used herein, unless indicated otherwise, the term "heterocyclic" means single-ring heterocyclic compound of C5~8, double-ring heterocyclic compound of C8~12, triple-ring heterocyclic compound of C11~14, which can optionally contain one or more hetero-atoms (such as N,O,S). For example, the term " heterocyclic " include but not limited to pyridyl, furyl, imidazolyl, benzo-imidazolyl, pyrimidyl, thiofuryl, quinolyl, indolyl, thiazolyl.

The materials of the invention are commercially available or can be chemically synthesized by traditional chemistry. For example, the silicon-based alkyl carbamate is commercially available, or it also can be synthesized by the following art: amino alkyl silane and dialkyl carbonate or cyclo carbonate are reacted in the presence of alkoxy sodium alcoholate catalyst to form the silicon-based alkyl carbamate product.

The above-mentioned methods are only a part of the methods of some compounds of the invention, thus a person skilled in this field may synthesize another compounds of the invention by adjusting above-mentioned methods, or a person skilled in this field may synthesize the materials of the invention by known arts. For example, compounds synthesized may further be purified by column chromatography, high efficiency liquid chromatography, crystallization, etc.

Synthesis chemistry of transformation and functional group protection methodology (protection and deprotection) is helpful for synthesis or application of compounds, which is known in the art, such as disclosed in R. Larock, Comprehensive Organic Transformations, VCH Publishers (1989); T.W. Greene and P.G.M. Wuts, Protective Groups in Organic Synthesis, 3rd Ed., John Wiley and Sons (1999); L. Fieser and M. Fieser, Fieser and Fieser's Reagents for Organic Synthesis, John Wiley and Sons (1994); and L. Paquette, ed., Encyclopedia of Reagents for Organic Synthesis, John Wiley and Sons (1995).

Other aspects of the invention will be apparent to those of ordinary skill in the according to disclosure herein.

The present invention is now illustrated in details.

### Silicon-Based Alkyl Carbamate

Typically, silicon-based alkyl carbamate of the invention is a compound of the following formula (I): 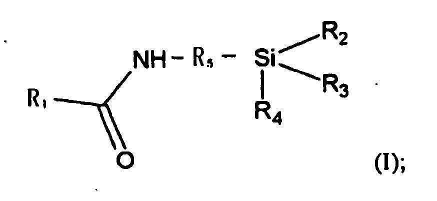 wherein,
R₁ is a saturated alkoxy group, preferably saturated C₁~C₆ alkoxy group; R₂ is a saturated alkyl group or a saturated alkoxy group, preferably saturated C₁~C₆ alkyl group or a saturated C₁~C₆ alkoxy group respectively; R₃ is a is a saturated alkyl group or a saturated alkoxy group, preferably saturated C₁~C₆ alkyl group or a saturated C₁~C₆ alkoxy group; R₄ is a saturated alkyl group or a saturated alkoxy group, preferably a saturated C₁~C₆ alkyl group or a saturated C₁~C₆ alkoxy group; R₅ is a substituted or unsubstituted carbon chain, preferably, said R₅ is a substituted or unsubstituted -(CH₂)n-, wherein n is a positive integer of 1 to 6, preferably 1 to 3, most preferably 1 or 3. The hydrogen atom " H "of the" -(CH₂)- " in formula (I) can be substituted, and the substituted compounds also fall in the scope of the invention, as long as this has no adverse effects on the invention object. For example, the above-mentioned "-(CH₂)-" can be substituted by alkyl or alkoxy group.

The above-mentioned R₁, R₂, R₃, R₄ may be identical alkyl or alkoxy group, or different alkyl or alkoxy groups.

Preferably, said silicon-based alkyl carbamate is a compound of the following formula (I-b): 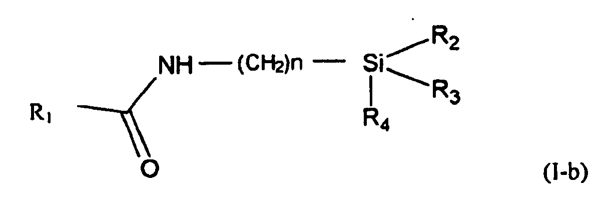 wherein, n is an integer of 1 to 6, preferably 1 to 3, most preferably 1 or 3.

### Isocyanato-Alkyl Silane

Typically, said isocyanato-alkyl silane is a compound of the following formula (II): 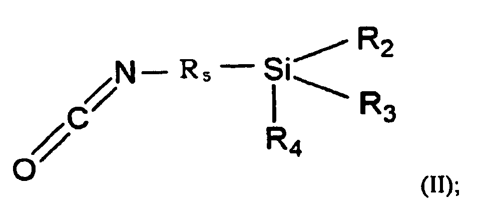 wherein, R₂ is a saturated alkyl or alkoxy group, preferably a saturated C₁~C₆ alkyl group or a saturated C₁~C₆ alkoxy group; R₃ is a saturated alky or alkoxy group, preferably a saturated C₁~C₆ alkyl group or a saturated C₁~C₆ alkoxy group; R₄ is a saturated alky or alkoxy group, preferably a saturated C₁~C₆alkyl group or a saturated C₁~C₆ alkoxy group. R₅ is a substituted or unsubstituted carbon chain, preferably, said R₅ is a substituted or unsubstituted -(CH₂)ₙ-, wherein n is a positive integer of 1 to 6, preferably 1 to 3, most preferably 1 or 3.. The hydrogen atom " H "of the" -(CH₂)- " in formula (I) can be substituted, and the substituted compounds fall in the scope of the invention, as long as this has no adverse effects on the invention object. For example, the above mentioned " -(CH₂)- " is substituted by alkyl or alkoxy group.

The above-mentioned R₂, R₃, R₄ may be identical alkyl or alkoxy group, or different alkyl or alkoxy groups.

Preferably, said isocyanato-alkyl silane is a compound of the following formula (II-a): 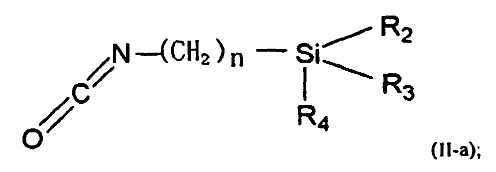 Wherein, n is a positive integer of 1 to 6, preferably 1 to 3, most preferably 1 or 3.

### Transition Metal Complexes

Transition metal complexes of the invention comprise of the following components:
an inorganic silica aluminum source component,
an active component, of 10 to 50mol%, preferably 30 to 50%, of the mole quantity of said inorganic silica aluminum source component;
a grafting component of amino poly-dimethylsiloxane, of 1 to 30mol%, preferably 5 to 10%, of the mole quantity of said inorganic silica aluminum source component;
wherein,
said active component has a precursor of Sn (II) source;
said grafting component of amino poly-dimethylsiloxane, which is grafted to a skeleton formed from said inorganic silica aluminum source, has the following structure of formula (IV):

NH (R)YSi-O-[(CH₃)₂SiO]ₚ-SiY₁NH-R' (IV)

wherein, Y, Y₁ is identical or different C₁~C₃ alkyl group;
R, R' is hydrogen, identical or different C₁~C₃ alkyl group respectively; and p is an integer of 10 to 1000, preferably 50 to 200.

The "mole quantity" of inorganic silica aluminum source component means total mole quantity of Na, Si, and Al in the inorganic silica aluminum source component.

Besides above-mentioned components, the transition metal complexes of the invention can also comprise other inert component(s), as long as this has no adverse effects on the invention object.

Preferably, said silica aluminum source forms a skeleton of [Na/Al/Si/O] crystal cells, more preferably, the mole ratio ofNa, Al, Si, O is 1:(1~2):(1~3):(1~6);

Preferably, said active component is loaded on said skeleton of [Na/Al/Si/O] crystal cells, more preferably, said active component is embedded into said skeleton of [Na/Al/Si/O] crystal cells, most preferably, said active component has 10 to 50 volume %, preferably 30 to 50 volume %, of its microscopic particles embedded to said crystal cells. Said " embedded "means a part of volume of the microscopic particles, such as Sn²⁺ ion, is positioned within a hollow space formed in the [Na/Al/Si/O] crystal cells.

Preferably, said active component is loaded by a method comprising the following steps of: molding and drying a mixture of said organic silica aluminum source and corresponding active component precursor, to obtain said skeleton of [Na/Al/Si/O] crystal cells loaded with said active component. The molding step or drying step is not particularly limited, as long as this has no adverse effects on the invention object. For example, the drying is carried out under a temperature of 100±20°C. The loading method can further comprise other step(s), for example, calcinating or baking after drying, such as under temperature ranging from 500 to 700°C, preferably 600 to 650°C.

The inorganic silica aluminum source of the invention is not particularly limited, as long as it can load the active component(s) thereon. Preferably, the inorganic silica aluminum source is selected from those compounds that can form crystal cells; more preferably, the crystal cells form a skeleton of [Na/Al/Si/O] crystal cells. When formed, the crystal cells may accommodate at least 10 to 50 volume %, preferably 30 to 50 volume % of volume of Sn (II), such as Sn²⁺ ion.

The source of Sn (II), such as Sn²⁺ ion, of the invention is not particularly limited, for example, bivalent tin salt or tin oxide, such as stannous chloride, stannous oxide, stannous hydroxide and combination thereof can be used.

The transition metal complexes of the invention is typically 0.1~10wt% of the total weight of reactant, typically, the reactant refers to the silicon-based alkyl carbamate, preferably 1~6wt%, more preferably 2~5wt%.

### Pyrolysis Step

A synthesis method for producing an isocyanato-alkyl silane, comprising the steps of:
(a) providing a silicon-based alkyl carbamate;
(b) pyrolyzing said silicon-based alkyl carbamate of the step (a) in the presence of transition metal complexes, to obtain said isocyanato-alkyl silane.

Said step (b) is carried out under a pyrolysis temperature ranging from 200 to 350 °C; preferably 200 to 300 °C, more preferably 200 to 250 °C. In prior pyrolysis reactions, considering that the silicon-based alkyl carbamate has a high molecular weight and is easy to polymerize itself, the pyrolysis temperature is typically less than 200 °C. However, the present invention enables to employ relatively higher pyrolysis temperature, thus accelerating the process greatly while ensuring the product purity.

The reaction duration of said step (b) is not particularly limited, as long as it has no adverse effects on the invention object. For example, 0.1 hour to 100 hours; preferably 1 to 50 hours, more preferably 2 to 10 hours.

The reaction pressure of said step (b) is not particularly limited, as long as it has no adverse effects on the invention object. For example, 0.1 kPa to 500 kPa; preferably 2 to 100 kPa, more preferably 2 to 20 kPa.

Said step (b) can be carried out without solvent, or can be carried out in the presence of solvent. If a solvent is used, the solvent is not particularly limited, as long as it is inert during reaction. The "inert" used herein means that the solvent does not react with the other reactants. Specially, said solvent is selected from alkyl carbonate, preferably the group consisting of: dimethyl carbonate, diethyl carbonate, dipropyl carbonate, methyl ethyl carbonate, methyl propyl carbonate, ethyl propyl carbonate and combination thereof. Quantity of the solvent is not particularly limited, as long as it has no adverse effects on the invention object.

### Preferably, above method comprises of an additional step(c):

Carrying out dealcoholization reaction from said isocyanato-alkyl silane obtained by step (b) under reduced pressure, to obtain purified isocyanato-alkyl silane.Preferably, the dealcoholization under reduced pressure in said step (c) is carried out under a temperature ranging from 200 to 350 °C, more preferably, 200 to 300 °C, and most preferably, 200-240°C.

Preferably, the dealcoholization under reduced pressure in said step (c) is carried out under a vacuum degree ranging from 0.1~500kPa, more preferably, 2-100 kPa, and most preferably, 2-20 kPa.

The pyrolysis reaction of step (b) and the dealcoholization under reduced pressure of said step (c) can be carried out simultaneously, or sequently. Alternatively, said step (b) is carried out for a while, then said step (b) and step (c) are carried out simultaneously. For example, said step (b) and step (c) can be carried out at the same time,

Preferably, the fraction is collected under 100∼130 °C/(2∼5) kPa in step (c).

### Purification Method

The purification method for isocyanato-alkyl silane, enables the polymer of isocyanato-alkyl silane formed in the process of purification only amounts 1% by weight on the basis of the total weight of isocyanato-alkyl silane. The purification method comprises the following steps:
(i) pyrolyzing said silicon-based alkyl carbamate in the presence of transition metal complexes, to obtain isocyanato-alkyl silane.

Obviously, the isocyanato-alkyl silane can react with a corresponding alcohol to obtain the silicon-based alkyl carbamate, therefore, the method of the present invention can also apply to purification of silicon-based alkyl carbamate.

For example, there is provided a purification method for silicon-based alkyl carbamate, comprising the steps of:
(I) pyrolyzing said silicon-based alkyl carbamate in the presence of transition metal complexes, to obtain isocyanato-alkyl silane;
(II) carrying out dealcoholization reaction from said isocyanato-alkyl silane obtained by step (I) under reduced pressure, to obtain purified isocyanato-alkyl silane,
(III) forming purified silicon-based alkyl carbamate from said purified isocyanato-alkyl silane of step (II).

Above reactions can be carried out for a single time, or they can be carried out multiple times repeatedly.

Said silicon-based alkyl carbamate, isocyanato-alkyl silane, and transition metal complexes are the same as those described above, respectively.

The reaction conditions are not particularly limited, for example the same or similar conditions as aforesaid synthesis method can be employed.

### Synthesis Method Of Transition Metal Complexes Catalyst

A synthesis method for transition metal complexes of the invention comprises the following steps:
(A) providing a skeleton formed by an inorganic silica aluminum component, wherein, the skeleton is loaded with an active component(s) that is 10 to 50%, preferably 30 to 50 %, of the mole quantity of said inorganic silica aluminum component, wherein, said active component has a precursor of Sn (II) source;
(B) grafting a starting material of grafting component of amino poly-dimethylsiloxane, in an amount of 1-30%, preferably, 5-10% of the mole quantity of said inorganic silica aluminum component, to said skeleton of step (A), to obtain the transition metal complexes of claim 8;
wherein, said starting material has the following structure of formula (IV):

NH(R)YSi-O-[(CH₃)₂SiO]ₚ-SiY₁NH-R' (IV)

wherein, Y, Y₁ is identical or different C₁~C₃ alkyl group;
R,R' is hydrogen, identical or different C₁~C₃ alkyl group respectively; p is an integer of 10 to 1000, preferably 50 to 200.

The inorganic silica aluminum source of the invention is not particularly limited, as long as it can load the active component(s) thereon. Preferably, the inorganic silica aluminum source is selected from those compounds that can form crystal cells; more preferably, the crystal cells form a skeleton of [NalAI/Si/O] crystal cells. When formed, the crystal cells may accommodate at least 10 to 50 volume %, preferably 30 to 50 volume % of volume of Sn (II), such as Sn²⁺ ion.

Methods for skeleton formation from inorganic silica aluminum source are not particularly limited, as long as they have no adverse effects on the invention object. Preferably, crystal cells are formed. More preferably, the said crystal cells form a skeleton of [Na/Al/Si/0] crystal cells. When formed, the crystal cells may accommodate at least 10 to 50 volume %, preferably 30 to 50 volume % of volume of Sn (II), such as Sn²⁺ ion. The formation can be accomplished by traditional skills in this field.

Various methods that are not particularly limited for embedding Sn (II), such as Sn²⁺ ion, into the skeleton of [Na/Al/Si/O] crystal cells can be adopted, for example, Sn²⁺ source may be mixed with an inorganic silica aluminum source in required proportion, to obtain required complexes.

Methods for loading the active components are not particularly limited, such as impregnation loading method or direct loading method, preferably, for example, Sn²⁺ source is mixed with an inorganic silica aluminum source for loading. More preferably, the mixture of the Sn²⁺ source with inorganic silica aluminum source is molded. For example, the mixture is dried, then baked under a temperature of 600-650 °C, such as, for 1~10 hours.

Source of Sn (II), such as Sn²⁺ ion, of the invention is not particularly limited, for example, bivalent tin salt or tin oxide, such as stannous chloride, stannous oxide, stannous hydroxide and combination thereof.

The merits of the invention reside in:
(1) The present method has a simple process route, uses cheap and available materials that are not toxic or explosive, produces small quantity of solid and liquidwaste residues, and is substantially free from pollution to the environment.
(2) The use of novel catalyst for dealcoholization in rectifying purification has increased the degree of alcohol elimination of the starting material, i.e. silicon-based alkyl carbamate, even to more than 95%, and improved selectivity of isocyanato-alkyl silane to more than 98%, and also improve product purity to more than 99%. Such rectifying purification can effectively control content of silicon-based cyanurate and isocyanato polysiloxane below 1%, which is formed during rectification by polymerization due to high activity.

The present invention is now illustrated in details incorporated with the embodiments. It is understood that the examples and embodiments described herein are for illustrative purposes only and shall not limit the scope of the invention. The experimental conditions in the following examples, if unspecified, are same as normal conditions, for example, the conditions specified in *Beilstein Organic Chemistry,* Chemical technology publisher, 1996, or the conditions suggested by their manufactures. The proportion and percent are based on weight, unless otherwise stated.

Unless otherwise stated or defined, all technical and scientific terms used herein have the same meaning as commonly understood by one of ordinary skilled in the art to which this invention pertains. Any methods and materials similar or equivalent to those described herein can be used in the practice of the invention.

### Synthesis Of Catalyst #1

Sodium oxide, aluminum hydroxide, and sodium silicate (the three components are used as inorganic silica aluminum source) were stirred vigorously and mixed homogenously with tin dichloride used as active component precursor, wherein, the mole ratio of Na: Al: Si: Sn was 1:1.5:2.5:1.5, subsequently, water in an amount of 30 weight% of the total weight of the materials was added, the mixture was mixed and molded, then was dried at 100°C for 4 hours, thereafter was baked under 600 - 650°C for 2 hours. The moldedbody obtained was impregnated into the isopropanol solution of 20 weight% NH₂CH₂CH₂CH₂Si-O-[(CH₃)₂SiO]₅₀-Si CH₂CH₂CH₂NH₂, until its grafting ratio reached 5%. The solution was filtered, then the solid residue obtained was dried at 120°C for 3 hours, to obtain transition metal complexes #1, wherein the molar ratio of Na: Al: Si:O was 2:3:5:6.

The grafting ratio was calculated by the following method: weighing the solid residue until its weight is stable after washed, measuring additional weight comparing to the molded body, calculating mole quantity of the additional weight, which is divided by the total mole quantity of the solid residue, thus obtaining the grafting ratio.

### Synthesis Of Catalyst #2

Sodium oxide, aluminum hydroxide, and sodium silicate (the three components are used as inorganic silica aluminum source)were stirred vigorously and mixed homogenously with tin dichloride used as active component precursor, wherein, the molar ratio of Na: A1: Si: Sn was 1:1:1:1.5, subsequently, water in an amount of 120 weight% of the total weight of the materials was added, the mixture was mixed and molded, then was dried at 100°C for 4 hours, thereafter was baked under 600 - 650°C for 2 hours. The molded body obtained was impregnated into the isopropanol solution of 20 weight% NH₂CH₂Si-O-[(CH₃)₂SiO]₂₀₀-Si CH₂ NH₂, until its grafting ratio reached 10%. The solution was filtered, then the solid residue obtained was dried at 120°C for 3 hours, to obtain transition metal complexes #2, wherein the molar ratio ofNa: Al: Si:O was 1:1:1:4.

### Synthesis Of Catalyst #3

Sodium oxide, aluminum hydroxide, and sodium silicate (the three components are used as inorganic silica aluminum source) were stirred vigorously and mixed homogenously with tin carbonate used as active component precursor, wherein, the molar ratio of Na: Al: Si: Sn was 1:1.5:2.5:1.5, subsequently, water in an amount of 30 weight% of the total weight of the materials was added, the mixture was mixed and molded, then was dried at 100°C for 4 hours, thereafter was baked under 600 - 650°C for 2 hours. The molded body obtained was impregnated into the isopropanol solution of 20 weight% NHCH₃CH₂CH₂CH₂Si-O-[(CH₃)₂SiO]₅₀-Si CH₂CH₂CH₂NHCH₃, until its grafting ratio reached 30%. The solution was filtered, then the solid residue obtained was dried at 120°C for 3 hours, to obtain transition metal complexes #3, wherein the molar ratio ofNa: Al: Si:O was2:3:5:6.

### Synthesis Of Catalyst #4

Sodium oxide, aluminum hydroxide, and tetraethyl orthosilicate (the three components are used as inorganic silica aluminum source) were stirred vigorously and mixed homogenously with stannous hydroxide used as active component precursor, wherein, the molar ratio of Na: Al: Si: Sn was 1:1.5:2.5:1.5, subsequently, water in an amount of 120 weight% of the total weight of the materials was added, the mixture was mixed and molded, then was dried at 100°C for 4 hours, thereafter was baked under 600 - 650°C for 2 hours. The molded body obtained was impregnated into the isopropanol solution of 20 weight% NH₂CH₂Si-O-[(CH₃)₂SiO]₈₀₀-Si CH₂ NH₂, until its grafting ratio reached 1%. The solution was filtered, then the solid residue obtained was dried at 120°C for 3 hours, to obtain transition metal complexes #4, wherein the molar ratio of Na: Al: Si: O was 2:3:5:6.

### Synthesis Of Catalyst #5

Sodium oxide, aluminum hydroxide, and tetraethyl orthosilicate (the three components are used as inorganic silica aluminum source) were stirred vigorously and mixed homogenously with stannous hydroxide used as active component precursor, wherein, the molar ratio of Na: A1: Si: Sn was 1: 1.5:2.5:0.5, subsequently, added water in an amount of 120 weight% of the total weight of the materials was added, the mixture was mixed and molded, then was dried at 100°C for 4 hours, thereafter was baked under 600 - 650°C for 2 hours. The molded body obtained was impregnated into the isopropanol solution of 20 weight% NH₂CH₂Si-O-[(CH₃)₂SiO]₈₀₀-Si CH₂ NH₂, until its grafting ratio reached 10%. The solution was filtered, then the solid residue obtained was dried at 120°C for 3 hours, to obtain transition metal complexes #5, wherein the molar ratio of Na: Al: Si: O was 2:3:5:6.

### Example 1:

To a vessel containing 500g of [Carbamic acid, 3-(trimethoxysilyl)propyl, methyl ester, methyl trimethoxysilylpropyl carbamate], 25g of catalyst#1 obtained from aforementioned synthesis method was added under stirring, then the vessel was kept under a temperature of 240°C for 3 hours. The system pressure was reduced until the negative pressure of the system reached 6.0∼7kPa, dealcoholization reaction was carried out. When finished, the temperature was raised until 280°C, then rectified under reduced pressure to collect 423g fraction of 100~130°C /2~5kPa. By analysis using GC(**GC-2014**,SHIMADZU), the fraction had a purity of 99.12%, yield of 97.9%, and selectivity of 98%. By analysis using infrared spectrum, there was a strong and sharp absorption peak at 2276cm⁻¹, which is a characteristic absorption peak testifying N=C=O group.

### Example 2:

To a vessel containing 500g of [Carbamic acid, 3-(triethoxysilyl)propyl, ethyl ester, ethyl triethoxysilylpropyl carbamate], 10g of catalyst#2 obtained from aforementioned synthesis method was added under stirring, then the vessel was kept under a temperature of 250°C for 3 hours. The system pressure was reduced until the negative pressure of the system reached 10.0~20kPa, dealcoholization reaction was carried out. When finished, the temperature was raised until 280°C, then rectified under reduced pressure to collect **416**g fraction of 100~130°C /2~5kPa. By analysis using GC(**GC-2014**,SHIMADZU), the fraction had a purity of 99.45%, yield of 98.5%, and selectivity of 99%. By analysis using infrared spectrum, there was a strong and sharp absorption peak at 2276cm⁻¹, which is a characteristic absorption peak testifying N=C=O group .

### Example 3:

To a vessel containing 500g of [Carbamic acid, 3-(triethoxysilyl)propyl, ethyl ester, ethyl triethoxysilylpropyl carbamate], 0.5g of catalyst#3 obtained from aforementioned synthesis method was added under stirring, then the vessel was kept under a temperature of 250°C for 3 hours. The system pressure was reduced until the negative pressure of the system reached 10.0~20kPa, dealcoholization reaction was carried out. When finished, the temperature was raised until 280°C, then rectified under reduced pressure to collect **410**g refraction of 100~130°C /2~5kPa. By analysis using GC(**GC-2014**,SHIMADZU), the fraction had a purity of 99.32%, yield of 97.4%, and selectivity of 98%. By analysis using infrared spectrum, there was a strong and sharp absorption peak at 2276cm⁻¹, which is a characteristic absorption peak testifying N=C=O group.

### Example 4:

To a vessel containing 500g of [Carbamic acid, 3-(tripropoxysilyl)propyl, methyl ester, ethyl tripropoxysilylpropyl carbamate], 50g of catalyst#4 obtained from aforementioned synthesis method was added under stirring, then the vessel was kept under a temperature of 250°C for 3 hours. The system pressure was reduced until the negative pressure of the system reached 10.0∼20kPa, dealcoholization reaction was carried out. When finished, the temperature was raised until 280°C, then rectified under reduced pressure to collect **409**g refraction of 100~130°C /2~5kPa. By analysis using GC(**GC-2014**,SHIMADZU), the fraction had a purity of 99.20%, yield of 97.1 %, and selectivity of 98%. By analysis using infrared spectrum, there was a strong and sharp absorption peak at 2276cm⁻¹, which is a characteristic absorption peak testifying N=C=O group.

### Example 5:

To a vessel containing 500g of [Carbamic acid, 3-(tripropoxysilyl)propyl, methyl ester, ethyl tripropoxysilylpropyl carbamate], 10g of catalyst#4 obtained from aforementioned synthesis method was added under stirring, then the vessel was kept under a temperature of 250°C for 3 hours. The system pressure was reduced until the negative pressure of the system reached 10.0~20kPa, dealcoholization reaction was carried out. When finished, the temperature was raised until 280°C, then rectified under reduced pressure to collect **406**g refraction of 100~130°C /2~5kPa. By analysis using GC(**GC-2014**,SHIMADZU), the fraction had a purity of 99.25%, yield of 96.4%, and selectivity of 98%. By analysis using infrared spectrum, there was a strong and sharp absorption peak at 2276cm⁻¹, which is a characteristic absorption peak testifying N=C=O group.

### Comparative Example 1:

A vessel containing 500g of [Carbamic acid, 3-(trimethoxysilyl)propyl, methyl ester, methyl trimethoxysilylpropyl carbamate]was stirred and kept at a temperature of 240°C for 3 hours. The system pressure was reduced until the negative pressure of the system reached 6.0∼7kPa, dealcoholization reaction was carried out. When finished, the temperature was raised until 280°C, then rectified under reduced pressure to collect **212**g refraction of 100~130°C /2~5kPa. By analysis using GC(**GC-2014**,SHIMADZU), the fraction had a purity of 45.36%, yield of 22.15%, and selectivity of 40%; By analysis using infrared spectrum, there was a strong and sharp absorption peak at 2276cm⁻¹, a characteristic absorption peak testifying N=C=O group.

### Comparative Example 2:

A vessel containing 500g of [Carbamic acid, 3-(triethoxysilyl)propyl, methyl ester, ethyl triethoxysilylpropyl carbamate]] was stirred and kept at a temperature of 250°C for 3 hours. The system pressure was reduced until the negative pressure of the system reached 10.0∼20.0kPa, dealcoholization reaction was carried out. When finished; the temperature was raised until 280°C, then rectified under reduced pressure to collect **185g** fraction of 100∼130°C /2∼5kPa. By analysis using GC(**GC-2014,** SHIMADZU), the fraction had a purity of 53.45%, yield of 23.5%, and selectivity of 46%; By analysis using infrared spectrum, there was a strong and sharp absorption peak at 2276cm⁻¹, which is a characteristic absorption peak testifying N=C=O group .

### Comparative Example 3:

To a vessel containing 500g of [Carbamic acid, 3-(triethoxysilyl)propyl, methyl ester, ethyl triethoxysilyl)propyl carbamate], 5g of tin chloride was added under stirring, then the mixture was kept at a temperature of 250°C for 3 hours. The system pressure was reduced until the negative pressure of the system reached 10.0∼20kPa, dealcoholization reaction was carried out. When finished, the temperature was raised until 280°C, then rectified under reduced pressure to collect 235g refraction of 100∼130°C /2∼5kPa. By analysis GC(**GC-2014,** SHIMADZU), the fraction had a purity of 63.28%, yield of 35.3%, and selectivity of 54%; By analysis using infrared spectrum, there was a strong and sharp absorption peak at 2276cm⁻¹, which is a characteristic absorption peak testifying N=C=O group.

Further, it would be appreciated that, in light of the above described teaching of the invention, the skilled in the art could make various changes or modifications to the invention, and these equivalents would still be within the scope of the invention defined by the issued claims of the application.

## Claims

1. A synthesis method for producing an isocyanato-alkyl silane, comprising the steps of:
(a) providing a silicon-based alkyl carbamate;
(b) pyrolyzing said silicon-based alkyl carbamate of the step (a) in the presence of transition metal complexes, to obtain said isocyanato-alkyl silane,
wherein said transition metal complexes comprise the following components:
an inorganic silica aluminum source component,
an active component, of 10 to 50 mol% of the mole quantity of said inorganic silica aluminum source component;
a grafting component of amino poly-dimethylsiloxane, of I to 30mol% of the mole quantity of said inorganic silica aluminum source component;
wherein,
said active component has a precursor of Sn (II) source;
said grafting component of amino poly-dimethylsiloxane, which is grafted to a skeleton formed from said inorganic silica aluminum source, has the following structure of formula (IV):
NH(R)YSi-O-[(CH₃)₂SiO]ₚ-SiY₁NH-R' (IV)
wherein, Y, Y₁ is identical or different C₁∼C₃ alkyl group;
R, R' is hydrogen, identical or different C₁∼C₃ alkyl group respectively; and p is an integer of 10 to 1000.

2. The method of claim 1, wherein, said active component is in an amount of 30 to 50 mol% of the mole quantity of said inorganic silica aluminum source component; said grafting component of amino poly-dimethylsiloxane is in an amount of 5 to 10 mol% of the mole quantity of said inorganic silica aluminum source component.

3. The method of claim 1, wherein, in formula (IV), p is an integer of 50 to 200.

4. The method of claim 1, wherein, said silica aluminum source forms a skeleton of [Na/Al/Si/O] crystal cells.

5. The method of claim 4, wherein, in the skeleton of [Na/Al/Si/O] crystal cells, the molar ratio of Na, Al, Si, O is 1:(1∼2):(1∼3):(1∼6).

6. The method of claim 4, wherein, said active component is loaded on said skeleton of [Na/Al/Si/O] crystal cells.

7. The method of claim 4, wherein, said active component is embedded to said skeleton of [Na/Al/Si/O] crystal cells.

8. The method of claim 4, wherein, said active component has 10 to 50 volume %, preferably 30 to 50 volume %, of its microscopic particles embedded to said crystal cells.

9. The method of claim 4, wherein, said active component is loaded by a method comprising the following steps of: molding and drying a mixture of said in organic silica aluminum source and corresponding active component precursor, to obtain said skeleton of [Na/Al/Si/O] crystal cells loaded with said active component.

10. The method of claim 1, wherein, said silicon-based alkyl carbamate is a compound of the following formula (I): 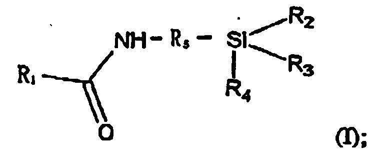 wherein,
R₁ is a saturated C₁∼C₆ alkoxy group;
R₂ is a saturated C₁∼C₆ alkyl group or a saturated C₁∼C₆ alkoxy group;
R₃ is a saturated C₁∼C₆ alkyl group or a saturated C₁∼C₆ alkoxy group;
R₄ is a saturated C₁∼C₆ alkyl group or a saturated C₁∼C₆ alkoxy group;
R₅ is a substituted or unsubstituted carbon chain, preferably, said R₅ is a substituted or unsubstituted -(CH₂)ₙ-, wherein n is a positive integer of 1 to 6.

11. The method of claim 1, said isocyanato-alkyl silane is a compound of the following formula (II): 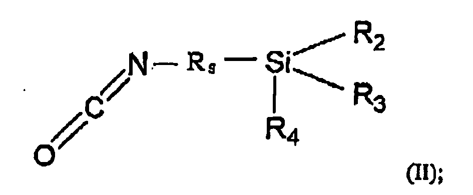 R₂ is a saturated C₁∼C₆ alkyl group or a saturated C₁∼C₆ alkoxy group;
R₃ is a saturated C₁∼C₆ alkyl group or a saturated C₁∼C₆ alkoxy group;
R₄ is a saturated C₁∼C₆ alkyl group or a saturated C₁∼C₆ alkoxy group;
R₅ is a substituted or unsubstituted carbon chain, preferably, said R₅ is a substituted or unsubstituted -(CH₂)ₙ-, wherein n is a positive integer of 1 to 6.

12. The method of claim 1, wherein,
said step (b) is carried out under a pyrolysis temperature ranging from 200 to 350 °C;
said step (b) is carried out in the presence of said transition metal complexesin an amount of 0.1∼10% of the total weight of said silicon-based alkyl carbamate,
said step (b) is carried out for a reaction duration ranging from 0.1 hour to 100 hour;
said step (b) is carried out under a reaction pressure ranging from 0.1 kPa to 500 kPa; and /or
said step (b) is carried out in the presence of solvent, wherein said solvent is alkyl carbonate, preferably, said alkyl carbonate is selected from the group consisting of: dimethyl carbonate, diethyl carbonate, dipropyl carbonate, methyl ethyl carbonate, methyl propyl carbonate, ethyl propyl carbonate and combination thereof.

13. The method of claim 1 to 12, wherein, comprising an additional step(c);
carrying out dealcoholization reaction from said isocyanato-alkyl silane under reduced pressure, to obtain purified isocyanato-alkyl silane.

14. The method of claim 13, wherein, the dealcoholization under reduced pressure in said step (c) is carried out under a temperature ranging from 200 to 350 °C;
the dealcoholization under reduced pressure in said step (c) is carried out under a vacuum degree ranging from 0.1∼500kPa.

15. The method of claim 13, wherein, said step (c) is carried out at any time during the period from the beginning to the end of said step (b).

16. The method of claim 13, wherein, the dealcoholization under reduced pressure in said step (c) is carried out by rectification under reduced pressure, wherein the fraction is collected under 100∼130 °C/(2∼5) kPa.

17. A transition metal complexes catalyst, which is suitable for catalyzing pyrolysis of silicon-based alkyl carbamate, comprises:
an inorganic silica aluminum source component,
an active component, of 10 to 50mol%, of the mole quantity of said inorganic silica aluminum source component;
a grafting component of amino poly-dimethylsiloxane, of 1 to 30mol% of the mole quantity of said inorganic silica aluminum source component;
wherein,
said active component has a precursor of Sn (II) source;
said grafting component of amino poly-dimethylsiloxane, which is grafted to a skeleton formed from said inorganic silica aluminum source, has the following structure of formula (IV):
NH(R)YSi-O-[(CH₃)₂SiO]ₚ-SiY₁NH-R (IV)
wherein, Y, Y₁ is identical or different C₁∼C₃ alkyl group;
R, R' is hydrogen, identical or different C₁∼C₃ alkyl group respectively; and p is an integer of 10 to 1000.

18. The transition metal complexes catalyst of claim 17, wherein, said active component is in an amount of 30 to 50 mol% of the mole quantity of said inorganic silica aluminum source component; said grafting component of amino poly-dimethylsiloxane is in an amount of 5 to 10 mol% of the mole quantity of said inorganic silica aluminum source component.

19. The transition metal complexes catalyst of claim 18, wherein, in formula (IV), p is an integer of 50 to 200.

20. A synthesis method for transition metal complexes catalyst according to any one of claims 17 to 19, comprising the steps of:
(A) providing a skeleton formed by an inorganic silica aluminum component, where said skeleton is loaded with active component, wherein said active component has a precursor of Sn (II) source;
(B) grafting starting material of grafting component of amino poly-dimethylsiloxane to said skeleton of step (A), to obtain the transition metal complexes of any one of claims 17 to 19.

21. The use of the transition metal complexes according to claim 17 in transforming organic carbamate group to corresponding isocyanate group.

## Patentansprüche

1. Syntheseverfahren zur Herstellung eines Isocyanatoalkylsilans, umfassend die Stufen:
(a) das Bereitstellen eines siliciumbasierten Alkylcarbamats;
(b) das Pyrolysieren des siliciumbasierten Alkylcarbamats von Stufe (a) in Gegenwart von Übergangsmetallkomplexen, um das Isocyanatoalkylsilan zu erhalten;
wobei die Übergangsmetallkomplexe die folgenden Bestandteile umfassen:
eine anorganische Siliciumdioxid-Aluminium-Quellenkomponente,
eine aktive Komponente in einer Menge von 10 bis 50 Mol-% der Molmenge der anorganischen Siliciumdioxid-Aluminium-Quellenkomponenten;
eine Pfropfkomponente aus Aminopolydimethylsiloxan in einer Menge von 1 bis 30 Mol-% der Molmenge der anorganischen Siliciumdioxid-Aluminium-Quellenkomponente;
wobei
die aktive Komponente eine Vorstufe einer Sn(II)-Quelle aufweist;
die Pfropfkomponente aus Aminopolydimethylsiloxan, die auf ein Gerüst, das aus der anorganischen Siliciumdioxid-Aluminium-Quelle gebildet ist, gepfropft wird, die folgende Strukturformel (IV) aufweist
NH(R)YSi-O-[(CH₃)₂SiO]ₚ-SiY₁NH-R' (IV)
wobei Y, Y₁ gleiche oder verschiedene C₁-C₃-Alkylgruppen bedeuten;
R, R' Wasserstoff oder gleiche oder verschiedene C₁-C₃-Alkylgruppen bedeuten; und p eine ganze Zahl mit einem Wert von 10 bis 1000 ist.

2. Verfahren nach Anspruch 1, wobei die aktive Komponente in einer Menge von 30 bis 50 Mol-% der Molmenge der anorganischen Siliciumdioxid-Aluminium-Quellenkomponente vorliegt; und wobei die Pfropfkomponente aus Aminopolydimethylsiloxan in einer Menge von 5 bis 10 Mol-% der Molmenge der anorganischen Siliciumdioxid-Aluminium-Quellenkomponente vorliegt.

3. Verfahren nach Anspruch 1, wobei in der Formel (IV) p eine ganze Zahl mit einem Wert von 50 bis 200 ist.

4. Verfahren nach Anspruch 1, wobei die Siliciumdioxid-Aluminium-Quelle ein Gerüst von [Na/Al/Si/O]-Kristallzellen bildet.

5. Verfahren nach Anspruch 4, wobei im Gerüst von [Na/Al/Si/O]-Kristallzellen das Molverhältnis von Na, Al, Si und O 1: (1∼2):(1∼3):(1∼6) bedeutet.

6. Verfahren nach Anspruch 4, wobei die aktive Komponente auf das Gerüst von [Na/Al/Si/O]-Kristallzellen aufgebracht ist.

7. Verfahren nach Anspruch 4, wobei die aktive Komponente in das Gerüst von [Na/Al/Si/O]-Kristallzellen eingebettet ist.

8. Verfahren nach Anspruch 4, wobei von der aktiven Komponente 10 bis 50 Vol.-% und vorzugsweise 30 bis 50 Vol.-% seiner mikroskopischen Teilchen in die Kristallzellen eingebettet sind.

9. Verfahren nach Anspruch 4, wobei die aktive Komponente durch ein Verfahren aufgebracht wird, das die folgenden Stufen umfasst:
Formgeben und Trocknen eines Gemisches der anorganischen Siliciumdioxid-Aluminium-Quelle und der entsprechenden Vorstufe der aktiven Komponente, um das Gerüst von [Na/Al/Si/O]-Kristallzellen, die mit der aktiven Komponente beladen sind, zu erhalten.

10. Verfahren nach Anspruch 1, wobei es sich beim siliciumbasierten Alkylcarbamat um eine Verbindung der folgenden Formel (I) handelt: 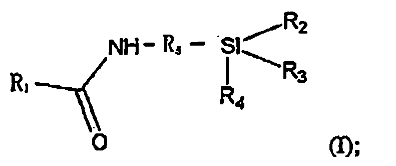 wobei
R₁ eine gesättigte C₁∼C₆-Alkoxygruppe bedeutet;
R₂ eine gesättigte C₁∼C₆-Alkylgruppe oder eine gesättigte C₁∼C₆-Alkoxygruppe bedeutet;
R₃ eine gesättigte C₁∼C₆-Alkylgruppe oder eine gesättigte C₁∼C₆-Alkoxygruppe bedeutet;
R₄ eine gesättigte C₁∼C₆-Alkylgruppe oder eine gesättigte C₁∼C₆-Alkoxygruppe bedeutet;
R₅ eine substituierte oder unsubstituierte Kohlenstoffkette bedeutet, wobei R₅ vorzugsweise substituiertes oder unsubstituiertes - (CH₂)ₙ- bedeutet, wobei n eine positive ganze Zahl mit einem Wert von 1 bis 6 ist.

11. Verfahren nach Anspruch 1, wobei es sich beim Isocyanatoalkylsilan um eine Verbindung der folgenden Formel (II) handelt: 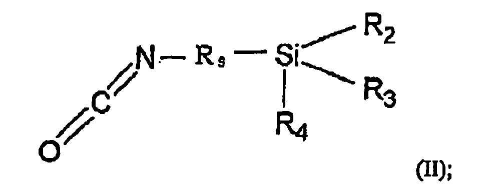 wobei
R₂ eine gesättigte C₁∼C₆-Alkylgruppe oder eine gesättigte C₁∼C₆-Alkoxygruppe bedeutet;
R₃ eine gesättigte C₁∼C₆-Alkylgruppe oder eine gesättigte C₁∼C₆-Alkoxygruppe bedeutet;
R₄ eine gesättigte C₁∼C₆-Alkylgruppe oder eine gesättigte C₁∼C₆-Alkoxygruppe bedeutet;
R₅ eine substituierte oder unsubstituierte Kohlenstoffkette bedeutet, wobei R₅ vorzugsweise substituiertes oder unsubstituiertes - (CH₂)ₙ- bedeutet, wobei n eine positive ganze Zahl mit einem Wert von 1 bis 6 ist.

12. Verfahren nach Anspruch 1, wobei
die Stufe (b) bei einer Pyrolysetemperatur im Bereich von 200 bis 350 °C durchgeführt wird;
die Stufe (b) in Gegenwart des Übergangsmetallkomplexes in einer Menge von 0,1∼10% des Gesamtgewichts des siliciumbasierten Alkylcarbamats durchgeführt wird;
die Stufe (b) für eine Reaktionsdauer im Bereich von 0,1 bis 100 Stunden durchgeführt wird;
die Stufe (b) bei einem Reaktionsdruck im Bereich von 0,1 kPa bis 500 kPa durchgeführt wird; und/oder
die Stufe (b) in Gegenwart eines Lösungsmittels durchgeführt wird, wobei es sich beim Lösungsmittel um ein Alkylcarbonat handelt und das Alkylcarbonat vorzugsweise aus der Gruppe ausgewählt wird, die aus Dimethylcarbonat, Diethylcarbonat, Dipropylcarbonat, Methylethylcarbonat, Methylpropylcarbonat, Ethylpropylcarbonat und einer Kombination davon besteht.

13. Verfahren nach Anspruch 1 bis 12, umfassend eine zusätzliche Stufe (c):
das Durchführen einer Dealkoholisierungsreaktion am Isocyanatoalkylsilan unter vermindertem Druck, um gereinigtes Isocyanatoalkylsilan zu erhalten.

14. Verfahren nach Anspruch 13, wobei die Dealkoholisierung unter vermindertem Druck in Stufe (c) bei einer Temperatur im Bereich von 200 bis 350 °C durchgeführt wird;
wobei die Dealkoholisierung unter vermindertem Druck in Stufe (c) unter einem Vakuum im Bereich von 0,1-500 kPa durchgeführt wird.

15. Verfahren nach Anspruch 13, wobei die Stufe (c) zu einem beliebigen Zeitpunkt während der Zeitspanne von Beginn bis zum Ende der Stufe (b) durchgeführt wird.

16. Verfahren nach Anspruch 13, wobei die Dealkoholisierung unter vermindertem Druck in Stufe (c) durch Rektifikation unter vermindertem Druck durchgeführt wird, wobei die Fraktion bei 100-130 °C/(2∼5)kPa gewonnen wird.

17. Übergangsmetallkomplex-Katalysator, der sich für die Katalyse der Pyrolyse eines siliciumbasierten Alkylcarbamats eignet, umfassend:
eine anorganische Siliciumdioxid-Aluminium-Quellenkomponente,
eine aktive Komponente in einer Menge von 10 bis 50 Mol-% der Molmenge der anorganischen Siliciumdioxid-Aluminium-Quellenkomponenten;
eine Pfropfkomponente aus Aminopolydimethylsiloxan in einer Menge von 1 bis 30 Mol-% der Molmenge der anorganischen Siliciumdioxid-Aluminium-Quellenkomponenten;
wobei
die aktive Komponente eine Vorstufe einer Sn(II)-Quelle aufweist;
die Pfropfkomponente aus Aminopolydimethylsiloxan, die auf ein Gerüst, das aus der anorganischen Siliciumdioxid-Aluminium-Quelle gebildet ist, gepfropft wird, die folgende Strukturformel (IV) aufweist
NH(R)YSi-O-[(CH₃)₂SiO]ₚ-SiY₁NH-R' (IV)
wobei Y, Y₁ gleiche oder verschiedene C₁-C₃-Alkylgruppen bedeuten;
R, R' Wasserstoff oder gleiche oder verschiedene C₁-C₃-Alkylgruppen bedeuten; und p eine ganze Zahl mit einem Wert von 10 bis 1000 ist.

18. Übergangsmetallkomplex-Katalysator nach Anspruch 17, wobei die aktive Komponente in einer Menge von 30 bis 50 Mol-% der Molmenge der anorganischen Siliciumdioxid-Aluminium-Quellenkomponente vorliegt; und wobei die Pfropfkomponente aus Aminopolydimethylsiloxan in einer Menge von 5 bis 10 Mol-% der Molmenge der anorganischen Siliciumdioxid-Aluminium-Quellenkomponente vorliegt.

19. Übergangsmetallkomplex-Katalysator nach Anspruch 18, wobei in der Formel (IV) p eine ganze Zahl mit einem Wert von 50 bis 200 ist.

20. Verfahren zur Synthese von Übergangsmetallkomplex-Katalysatoren nach einem der Ansprüche 17 bis 19, umfassend die folgenden Stufen:
(A) das Bereitstellen eines Gerüstes, das durch eine anorganische Siliciumdioxid-Aluminium-Komponente gebildet wird, wobei das Gerüst mit einer aktiven Komponente beladen ist, wobei die aktive Komponente eine Vorstufe einer Sn(II)-Quelle aufweist;
(B) das Pfropfen von Ausgangsmaterial einer Pfropfkomponente aus Aminopolydimethylsiloxan auf das Gerüst von Stufe (A), um Übergangsmetallkomplexe nach einem der Ansprüche 17 bis 19 zu erhalten.

21. Verwendung der Übergangsmetallkomplexe nach Anspruch 17 bei der Umwandlung einer organischen Carbamatgruppe in eine entsprechende Isocyanatgruppe.

## Revendications

1. Procédé de synthèse pour la production d'un isocyanato-alkylsilane, comprenant les étapes consistant à :
(a) se munir d'un alkylcarbamate à base de silicium ;
(b) pyrolyser ledit alkycarbamate à base de silicium de l'étape (a) en présence de complexes de métaux de transition, pour obtenir ledit isocyanato-alkylsilane,
dans lequel lesdits complexes de métaux de transition comprennent les composants suivants :
un composant source d'aluminium de silice inorganique,
un composant actif de 10 à 50 % en mole de la quantité molaire dudit composant source d'aluminium de silice inorganique ;
un composant de greffage de l'aminopolydiméthylsiloxane de 1 à 30 % en mole de la quantité molaire dudit composant source d'aluminium de silice inorganique ;
dans lequel ledit composant actif a un précurseur de source de Sn (II) ;
ledit composant de greffage de l'amino-polydiméthylsiloxane qui est greffé à un squelette formé de ladite source d'aluminium de silice inorganique, a la structure suivante de formule (V) :
NH(R)YSi-O-[(CH₃)₂SiO]ₚ-SiY₁NH-R' (IV)
dans laquelle Y, Y₁ sont des groupes alkyle en C₁ à C₃ identiques ou différents ;
R, R' sont un atome d'hydrogène, des groupe alkyle en C₁ à C₃ identiques ou différents, respectivement ; et p est un nombre entier de 10 à 1000.

2. Procédé selon la revendication 1, dans lequel ledit composant actif est présent en une quantité de 30 à 50 % en mole de la quantité molaire dudit composant source d'aluminium de silice inorganique ; ledit composant de greffage de l'amino-poly-diméthylsiloxane étant présent en une quantité de 5 à 10 % en mole de la quantité molaire dudit composant source d'aluminium de silice inorganique.

3. Procédé selon la revendication 1, dans lequel, dans la formule (IV), p est un nombre entier de 50 à 200.

4. Procédé selon la revendication 1, dans lequel ladite source d'aluminium de silice forme un squelette de cellules cristallines de [Na/Al/Si/O].

5. Procédé selon la revendication 4, dans lequel, dans le squelette des cellules cristallines de [Na/Al/Si/O], le rapport molaire de Na, Al, Si, O est de 1: (1∼2) 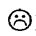 1∼3) : (1∼6).

6. Procédé selon la revendication 4, dans lequel ledit composant actif est chargé sur ledit squelette des cellules cristallines de [Na/Al/Si/O].

7. Procédé selon la revendication 4, dans lequel ledit composant actif est inclus dans ledit squelette des cellules cristallines de [Na/Al/Si/O].

8. Procédé selon la revendication 4, dans lequel ledit composant actif a 10 à 50 % en volume, de préférence, 30 à 50 % en volume de ses particules microscopiques incluses dans lesdites cellules cristallines.

9. Procédé selon la revendication 4, dans lequel ledit composant actif est chargé par un procédé comprenant les étapes suivantes de moulage et de séchage d'un mélange de ladite source d'aluminium de silice inorganique et du précurseur de composant actif correspondant, pour obtenir ledit squelette de cellules cristallines de [Na/Al/Si/O] chargé avec ledit composant actif.

10. Procédé selon la revendication 1, dans lequel ledit alkylcarbamate à base de silicium est un composé de la formule (I) suivante : 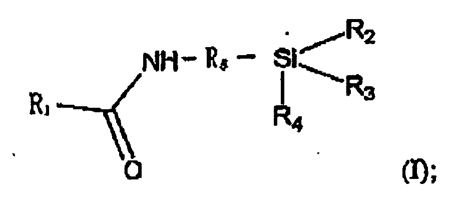 dans laquelle
R₁ est un groupe alcoxy en C₁ à C₆ saturé ;
R₂ est un groupe alkyle en C₁ à C₆ saturé ou un groupe alcoxy en C₁ à C₆ saturé ;
R₃ est un groupe alkyle en C₁ à C₆ saturé ou un groupe alcoxy en C₁ à C₆ saturé ;
R₄ est un groupe alkyle en C₁ à C₆ saturé ou un groupe alcoxy en C₁ à C₆ saturé ;
R₅ est une chaîne de carbone substituée ou non substituée, de préférence, ledit R₅ est -(CH₂)ₙ-substitué ou non substitué, n étant un nombre entier positif de 1 à 6.

11. Procédé selon la revendication 1, ledit isocyanato-alkylsilane étant un composé de la formule (II) suivante : 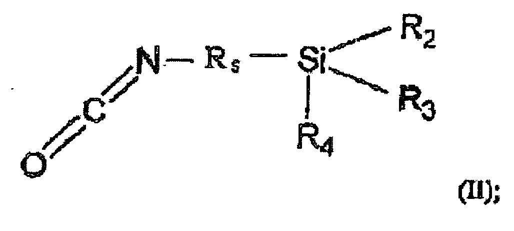 R₂ est un groupe alkyle en C₁ à C₆ saturé ou un groupe alcoxy en C₁ à C₆ saturé ;
R₃ est un groupe alkyle en C₁ à C₆ saturé ou un groupe alcoxy en C₁ à C₆ saturé ;
R₄ est un groupe alkyle en C₁ à C₆ saturé ou un groupe alcoxy en C₁ à C₆ saturé ;
R₅ est une chaîne de carbone substituée ou non substituée, de préférence, ledit R₅ est -(CH₂)ₙ-substitué ou non substitué, n étant un nombre entier positif de 1 à 6.

12. Procédé selon la revendication 1, dans lequel ladite étape (b) est réalisée sous une température de pyrolyse de 200 à 350° C ;
ladite étape (b) est réalisée en présence dudit complexe de métaux de transition en une quantité de 0,1 à 10 % du poids total dudit alkylcarbamate à base de silicium,
ladite étape (b) est réalisée pendant une durée réactionnelle de 0,1 heure à 100 heures ;
ladite étape (b) est réalisée sous une pression réactionnelle de 0,1 kPa à 500 kPa ; et/ou
ladite étape (b) est réalisée en présence de solvant, ledit solvant étant l'alkylcarbonate, de préférence, ledit alkylcarbonate étant choisi dans le groupe comprenant le diméthylcarbonate, le diéthylcarbonate, le dipropylcarbonate, le méthyléthylcarbonate, le méthylpropylcarbonate, l'éthylpropylcarbonate et leur combinaison.

13. Procédé selon la revendication 1 à 12, comprenant une étape supplémentaire (c) :
la réalisation d'une réaction de désalcoolisation dudit isocyanato-alkylsilane sous pression réduite, pour obtenir un isocyanato-alkylsilane purifié.

14. Procédé selon la revendication 13, dans lequel la désalcoolisation sous pression réduite à ladite étape (c) est réalisée à une température de 200 à 350° C ;
la désalcoolisation sous pression réduite de ladite étape (c) étant réalisée sous un vide de 0,1 ∼ 500 kPa.

15. Procédé selon la revendication 13, dans lequel ladite étape (c) est réalisée à un moment quelconque pendant la période du début à la fin de ladite étape (b).

16. Procédé selon la revendication 13, dans lequel la désalcoolisation sous pression réduite à ladite étape (c) est réalisée par rectification sous pression réduite, la fraction étant recueillie à 100 ∼ 130° C/(2 ∼ 5 kPa).

17. Catalyseur de complexes de métaux de transition qui est approprié pour catalyser la pyrolyse de l'alkylcarbamate à base de silicium, comprenant
un composant source d'aluminium de silice inorganique,
un composant actif de 10 à 50 % en mole de la quantité molaire dudit composant source d'aluminium de silice inorganique ;
un composant de greffage de l'aminopolydiméthylsiloxane de 1 à 30 % en mole de la quantité molaire dudit composant source d'aluminium de silice inorganique ;
dans lequel ledit composant actif a une source de précurseur Sn (II) ;
ledit composant de greffage de l'amino-poly-diméthylsiloxane qui est greffé à un squelette formé de ladite source d'aluminium de silice inorganique, a la structure suivante de formule (V) :
NH(R)YSi-O-[(CH₃)₂SiO]ₚ-SiY₁NH-R' (IV)
dans laquelle Y, Y₁ sont des groupes alkyle en C₁ à C₃ identiques ou différents ;
R, R' sont un atome d'hydrogène, des groupes alkyle en C₁ à C₃ identiques ou différents, respectivement ; et p est un nombre entier de 10 à 1000.

18. Catalyseur de complexes de métaux de transition selon la revendication 17, dans lequel ledit composant actif est présent en une quantité de 30 à 50 % en mole de la quantité molaire dudit composant source d'aluminium de silice inorganique ; ledit composant de greffage de l'amino-poly-diméthylsiloxane étant présent en une quantité de 5 à 10 % en mole de la quantité molaire dudit composant source d'aluminium de silice inorganique.

19. Catalyseur de complexes de métaux de transition selon la revendication 18, dans lequel, dans la formule (IV), p est un nombre entier de 50 à 200.

20. Procédé de synthèse de catalyseur de complexes de métaux de transition selon l'une quelconque des revendications 17 à 19, comprenant les étapes consistant à :
(A) se munir d'un squelette formé par un composant d'aluminium de silice inorganique, ledit squelette étant chargé avec le composant actif, ledit composant actif ayant un précurseur de source de Sn (II) ;
(B) greffer un matériau de départ du composant de greffage de l'amino-poly-diméthylsiloxane audit squelette de l'étape (A) pour obtenir les complexes de métaux de transition selon l'une quelconque des revendications 17 à 19.

21. Utilisation des complexes de métaux de transition selon la revendication 17, dans la transformation du groupe carbamate organique en un groupe isocyanate correspondant.
